# EUROPÄISCHE PATENTSCHRIFT

(11) **EP 2 867 544 B1**
(45) Veröffentlichungstag und Bekanntmachung des Hinweises auf die Patenterteilung: **30.11.2016**
(21) Anmeldenummer: 13732442.2
(22) Anmeldetag: 25.06.2013
(51) Int. Cl.: F16B 13/06, F16B 13/08, F16B 31/02

(54) **SPREIZANKER**
EXPANSION BOLT
BOULON À EXPANSION

(30) Priorität: 02.07.2012 DE 102012211418
(43) Veröffentlichungstag der Anmeldung: 06.05.2015
(73) Patentinhaber: Hilti Aktiengesellschaft, 9494 Schaan (LI)
(72) Erfinder: ECKSTEIN, Andreas, 86899 Landsberg am Lech (DE); GOLDT, Mathias, 6800 Feldkirch (AT); SCHAEFFER, Marc, 6800 Feldkirch-Nofels (AT); APPL, Joerg, 6800 Feldkirch (CH); DIJKHUIS, Arjen Detmer, 6800 Feldkirch (AT)
(74) Vertreter: Hilti Aktiengesellschaft Corporate Intellectual Property
(86) Internationale Anmeldenummer: PCT/EP2013/063192
(87) Internationale Veröffentlichungsnummer: WO 2014/005876

(56) Entgegenhaltungen:
- EP-A1- 0 688 965
- DE-A1- 2 939 096
- DE-A1- 3 142 432
- DE-A1- 10 106 844
- US-A- 2 850 937

## Beschreibung

Die Erfindung betrifft ein Verfahren zum Setzen eines Spreizankers gemäss dem Oberbegriff des Anspruchs 1.

Es sind, beispielsweise aus der EP 1 892 424 A2, Spreizanker bekannt, die einen Ankerbolzen und eine Spreizhülse aufweisen. Sie dienen zur Befestigung eines Bauteils an einem Substrat. Zur Verankerung des Spreizankers im Substrat wird die Spreizhülse mittels des Ankerbolzens in eine vorbereitete Bohrung eingeführt, insbesondere eingehämmert. Sodann wird der Ankerbolzen ein Stück weit aus der Bohrung zurückgezogen, wobei die Spreizhülse hierbei aufgrund ihrer Wechselwirkung mit der umgebenden Bohrlochwand im Wesentlichen ortsfest bleibt. Infolgedessen kommt es zu einer axialen Verschiebung des Ankerbolzens relativ zur Spreizhülse, und der Spreizbereich des Ankerbolzens wird axial in die Spreizhülse eingezogen. Das Einziehen wiederum hat zur Folge, dass die Spreizhülse radial aufgeweitet wird und der Anker damit im Bohrloch verankert wird. Dieses Prinzip liegt auch der Erfindung zugrunde.

Das Herausziehen des Ankerbolzens zum Aufspreizen der Spreizhülse kann gemäss EP 1 892 424 A2 beispielsweise durch Anziehen einer am Ankerbolzen angeordneten Mutter bewirkt werden. Für ein besonders einheitliches und zuverlässiges Ergebnis sollte hierbei an der Mutter ein definiertes Drehmoment aufgebracht werden, beispielsweise mittels eines Drehmomentschlüssels, um einerseits ein hinreichendes Aufspreizen der Spreizhülse zu gewährleisten, und um andererseits eine potenziell nachteilige Überbeanspruchung am Spreizmechanismus zu verhindern.

Ein weiterer Spreizanker ist aus der DE 101 06 844 A1 bekannt. Bei diesem Spreizanker wird das Herausziehen des Ankerbolzens zum Aufspreizen der Spreizhülse durch ein Federelement bewirkt. Der bekannte Spreizanker wird mit vorgespanntem Federelement in das Bohrloch eingesetzt. Anschliessend wird ein Haltemechanismus gelöst und das Federelement freigegeben.

Ein gattungsgemässer Spreizanker geht aus der WO 97/32631 A1 hervor. Diese Schrift lehrt einen Spreizanker für das Sportklettern mit einem Federelement, welches beim Einsetzen des Ankers in das Bohrloch gespannt wird, und welches sodann den Spreizmechanismus betätigt.

Die DE 33 31 097 C2, die US 1 583 849 A und die DE 30 22 011 A1 lehren Spreizanker mit Federelementen, welche die Vorspannung im Anker aufrechterhalten können, auch wenn es nach dem Setzvorgang zu Strukturänderungen im Substrat kommen sollte. Weitere Spreizanker mit Federelementen sind aus der EP 0 461 790 B1 und der DE 7 334 026 U bekannt.

Aufgabe der Erfindung ist es, ein Verfahren zum Setzen eines Spreizankers anzugeben, der bei besonders geringem Aufwand und geringen Kosten besonders einfach, aber zugleich zuverlässig gesetzt werden kann.

Die Aufgabe wird erfindungsgemäss durch ein Verfahren zum Setzen eines Spreizankers mit den Merkmalen des Anspruchs 1 gelöst. Bevorzugte Ausführungsformen sind in den abhängigen Ansprüchen angegeben.

Erfindungsgemäss ist bei einem Verfahren zum Setzen eines Spreizankers mit einem Ankerbolzen mit einem Spreizbereich, einer Spreizhülse, welche den Ankerbolzen umgibt, und welche durch Einziehen des Spreizbereichs aufspreizbar ist, und einem am Ankerbolzen angeordneten Federelement, welches durch Einführen des Ankerbolzens in ein Bohrloch spannbar ist, und welches beim anschliessenden Entspannen den Spreizbereich des Ankerbolzens in die Spreizhülse einziehen kann, ein Indikatorelement vorgesehen, welches das Erreichen einer Sollspannung des Federelements anzeigt.

Ein erster Grundgedanke der Erfindung kann darin gesehen werden, den Spreizanker mit einem Federelement auszustatten, welches beim Eintreiben des Ankers in das Bohrloch einfedert und dabei Energie aufnimmt, wobei diese aufgenommene Energie beim anschliessenden Entspannen des Federelements den Spreizmechanismus des Spreizankers betätigt und den Anker im Bohrloch sichert. Demgemäss kann erfindungsgemäss sowohl das Eintreiben des Ankers als auch das Betätigen des Spreizmechanismus allein durch Axialkräfte bewirkt werden. Zum Setzen des Ankers ist somit lediglich ein einziges Werkzeug, beispielsweise ein Hammer, erforderlich, wohingegen ein Schraubenschlüssel entfallen kann. Hierdurch ist der Setzvorgang verglichen mit einem drehmomentkontrollierten Setzvorgang mittels einer Mutter erheblich vereinfacht.

Hierauf aufbauend hat die Erfindung weiter erkannt, dass durch Überwachen des erfindungsgemässen Federelements in besonders einfacher und zugleich zuverlässiger Weise nachgewiesen werden kann, ob der Spreizmechanismus korrekt betätigt wurde, ob also der Anker ordnungsgemäß gesetzt wurde. Denn zwar ist das Kernstück des Spreizmechanismus, nämlich der Spreizbereich und die Spreizhülse, nach dem Setzen des Ankers zumindest teilweise im Bohrloch verborgen und somit für eine unmittelbare Setzkontrolle nicht mehr ohne weiteres zugänglich. Die Erfindung hat aber einerseits erkannt, dass mit dem erfindungsgemässen Federelement ein weiteres Bauteil zur Verfügung steht, welches am Setzvorgang beteiligt ist und somit Rückschlüsse auf den Setzvorgang zulässt, und hat andererseits zudem erkannt, dass das Federelement beim Setzen zumindest teilweise ausserhalb des Bohrlochs verbleiben kann, so dass es für eine Setzkontrolle besonders gut zugänglich ist. Basierend auf dieser Erkenntnis lehrt die Erfindung ein Indikatorelement, welches das Federelement überwacht und welches insbesondere anzeigt, ob eine Sollspannung im Federelement erreicht wurde. Da nach der Erfindung der Spreizmechanismus zumindest zum Teil durch die im Federelement gespeicherte Energie betätigt wird, ist die maximale Spannung im Federelement ein besonders zuverlässiger Indikator dafür, bis zu welchem Grad der Spreizmechanismus betätigt wurde. Da die Federspannung überdies in der Regel unmittelbar mit dem Federweg zusammenhängt, kann die Setzkontrolle in besonders einfacher Weise durch Überwachung der Verformung des Federelements erfolgen. Ein im erfindungsgemässen Verfahren verwendetes, dem Federelement zugeordnetes Indikatorelement ermöglicht somit eine besonders zuverlässige Setzkontrolle mit besonders einfachen Mitteln.

Erfindungsgemäss ist im Verfahren ein Indikatorelement vorgesehen, welches das Erreichen einer Sollspannung des Federelements anzeigt. Da die Federspannung in der Regel unmittelbar mit dem Federweg zusammenhängt, kann in einer alternativen Beschreibung ein Indikatorelement vorgesehen sein, welches das Erreichen eines Sollfedeniveges anzeigt.

Vorzugsweise ist das Indikatorelement Bestandteil des Spreizankers. Somit weist jeder Anker sein eigenes Indikatorelement auf, was die Handhabung erheblich vereinfacht. Insbesondere kann daher vorgesehen sein, dass das Indikatorelement mechanisch mit dem Ankerbolzen verbunden ist.

Besonders bevorzugt ist es, dass das Indikatorelement am Federelement angeordnet ist. Dies kann einen konstruktiv besonders einfachen und kompakten Aufbau bei zugleich hoher Zuverlässigkeit ermöglichen.

Weiterhin ist es vorteilhaft, dass das Federelement zumindest eine Tellerfeder aufweist. Tellerfedern können Federkennlinien aufweisen, die zum zuverlässigen Betätigen des Spreizmechanismus bestehend aus Spreizbereich und Spreizhülse besonders geeignet sind. Überdies kann das Erreichen der Sollspannung an Tellerfedern besonders einfach nachgewiesen werden.

Beispielsweise kann vorgesehen sein, dass das Indikatorelement einen Indikatorring aufweist, welcher mit der Tellerfeder verbunden ist, und welcher sich bei Erreichen der Sollspannung zumindest teilweise von der Tellerfeder löst. Zum Beispiel kann der Indikatorring mit der Tellerfeder verklebt sein. Beim Spannen der Tellerfeder kommt es zu einer Deformation der Tellerfeder und somit zu einer Belastung der Verbindung zwischen Indikatorring und Tellerfeder. Bei Erreichen der Sollspannung löst sich die stoffschlüssige Verbindung zwischen Indikatorring und Tellerfeder, und der Indikatorring wird zumindest teilweise freigegeben, was einen korrekten Setzvorgang anzeigt. Das Indikatorelement kann aber auch dadurch betätigt werden, dass ein mit dem Ankerbolzen zusammenhängendes Element, beispielsweise die Mutter, bei Erreichen des Sollfederweges auf das Indikatorelement aufschlägt, wodurch zum Beispiel ein Teil des Indikatorelements abgetrennt werden kann oder eine Farbpatrone zerstört werden kann. Das Indikatorelement kann somit im erfindungsgemässen Verfahren beispielsweise durch Deformation des Federelements oder durch Aufschlag eines mit dem Ankerbolzen zusammenhängenden Elements, insbesondere der am Ankerbolzen angeordneten Mutter, betätigbar sein.

Besonders vorteilhaft ist es, dass die Tellerfeder und/oder der Indikatorring den Ankerbolzen umgibt. Hierdurch kann eine besonders kompakte Bauweise erhalten werden.

Insbesondere kann die Tellerfeder so konfiguriert sein, dass sie bei Erreichen der Sollspannung völlig flach ist. Hierdurch kann das Erreichen der Sollspannung besonders einfach nachgewiesen werden.

Damit das Federelement durch Einführen des Ankerbolzens in das Bohrloch spannbar ist, und damit es beim anschliessenden Entspannen den Spreizbereich des Ankerbolzens in die Spreizhülse einziehen kann, weist der Ankerbolzen des erfindungsgemässen Verfahrens ein axiales Widerlager für das Federelement auf. Auf seiner dem Widerlager abgewandten Seite ist das Federelement zweckmässiger Weise zur Anlage an einem zu befestigenden Bauteil oder auch zur Anlage unmittelbar am Bohrlochmund des Bohrlochs vorgesehen, so dass das Federelement zwischen dem Widerlager des Ankerbolzens und dem Bauteil beziehungsweise dem Bohrlochmund verspannt werden kann.

Das Widerlager wird vorzugsweise durch die am Ankerbolzen angeordnete Mutter gebildet. Demgemäss wirkt die am Ankerbolzen angeordnete Mutter zum Spannen des Federelements auf das Federelement ein. Bevorzugt kann dieselbe Mutter auch das Indikatorelement betätigen. Grundsätzlich können aber auch andere Elemente als Widerlager dienen. Zwischen dem Widerlager und dem Federelement können auch zusätzliche Elemente wie zum Beispiel Ringscheiben vorgesehen sein.

Besonders geeignet ist die Erfindung für Spreizanker, die als sogenannte Stud-Anchors ausgebildet sind. Bei solchen Stud-Anchors ist die Spreizhülse relativ kurz und reicht nach dem bestimmungsgemässen Setzvorgang nicht aus dem Bohrloch heraus. Die zum Aufspreizen der Spreizhülse notwendige axiale Fixierung der Spreizhülse im Bohrloch wird bei Stud-Anchors in der Regel vorwiegend durch die Wechselwirkung, insbesondere die Reibung, zwischen der Bohrlochwand und der Hülse bewirkt. Da sich bei solchen Stud-Anchors die Spreizhülse nach dem Setzen in der Regel vollständig im Bohrloch befindet, ist eine Setzkontrolle an der Spreizhülse selbst bei diesem Ankertyp besonders schwierig. Die im erfindungsgemässen Verfahren vorhandene Setzkontrolle durch ein Indikatorelement am aussenliegenden Federelement schafft hier eine Möglichkeit, dennoch eine einfache Setzkontrolle durchzuführen.

Stud-Anchors zeichnen sich in der Regel dadurch aus, dass am Ankerbolzen, insbesondere auf der dem Spreizbereich abgewandten Seite der Spreizhülse, ein Anschlag vorgesehen ist, insbesondere angeformt ist, der eine Verschiebung der Spreizhülse vom Spreizbereich hinweg begrenzt. Denn dies erlaubt es, die relativ kurze Spreizhülse zusammen mit dem Ankerbolzen tief in das Bohrloch einzubringen. Dieses Merkmal kann vorteilhafterweise auch bei einem im erfindungsgemässen Verfahren verwendeten Anker vorgesehen sein. Der Anschlag ist zweckmässigerweise ringförmig ausgebildet und kann beispielsweise durch eine Ringstufe oder eine Ringwulst gebildet sein.

Weiterhin ist es bevorzugt, dass das Federelement eine degressive Federkennlinie aufweist. Denn bei einer degressiven Federkennlinie kann über einen weiten Federweg eine hohe Kraft aufrecht erhalten werden und somit gewährleistet werden, dass der Spreizmechanismus auch dann zuverlässig betätigt wird, wenn die Spreizhülse beim Setzen ein Stück weit zum Bohrlochmund hin zurückrutscht. Insbesondere auch vor diesem Hintergrund kann es vorteilhaft sein, dass das Federelement zumindest eine Tellerfeder aufweist, da mit einer Tellerfeder in besonders einfacher Weise eine degressive Federkennlinie bereitgestellt werden kann.

Bevorzugt kann der Ankerbolzen ein Lastangriffsmittel, beispielsweise ein Gewinde, aber auch einen Kopf, aufweisen, welches zur Einleitung von axialen Zugkräften in den Ankerbolzen dient. Zweckmässigerweise kann das Lastangriffsmittel an einem dem Spreizbereich gegenüberliegenden Endbereich des Ankerbolzens angeordnet sein. Die Einleitung von axialen Stosskräften in den Ankerbolzen zum Setzen des Ankers, insbesondere zum Eintreiben des Ankerbolzens mit Spreizhülse in das Bohrloch und/oder zum Spannen der Federeinrichtung, kann vorzugsweise an der Stirnseite des Ankerbolzens erfolgen, beispielsweise durch Hammerschläge auf die Stirnseite des Ankerbolzens.

Im Spreizbereich verjüngt sich der Ankerbolzen zweckmässigeniveise in Richtung zur Spreizhülse beziehungsweise zum Lastangriffsmittel hin. Im Spreizbereich kann der Ankerbolzen insbesondere konisch ausgebildet sein. Damit der Spreizbereich die Spreizhülse deformieren kann, weist der Ankerbolzen im Spreizbereich bereichsweise einen Aussenquerschnitt auf, der grösser ist als der Innenquerschnitt der nicht deformierten Spreizhülse.

Soweit im Zusammenhang mit dieser Anmeldung von "axial" und "radial" die Rede ist, kann sich dies in fachüblicher Weise insbesondere auf die Längsachse des Ankerbolzens beziehen.

Die Erfindung betrifft ein Verfahren zum Setzen eines Spreizankers mit einem Ankerbolzen mit einem Spreizbereich, einer Spreizhülse, welche den Ankerbolzen umgibt, und welche durch Einziehen des Spreizbereichs aufspreizbar ist, und einem am Ankerbolzen angeordneten Federelement, welches durch Einführen des Ankerbolzens in ein Bohrloch spannbar ist, und beim anschliessenden Entspannen den Spreizbereich des Ankerbolzens in die Spreizhülse einziehen kann, bei dem in einem Substrat das Bohrloch bereitgestellt wird, die Spreizhülse des Spreizankers durch Aufbringen von Axialkräften auf den Ankerbolzen in das Bohrloch eingetrieben wird, das Federelement des Spreizankers durch Aufbringen von Axialkräften auf den Ankerbolzen bis zu einer Sollspannung gespannt wird, wobei das Erreichen der Sollspannung durch das Indikatorelement angezeigt wird, der Spreizbereich des Ankerbolzens durch im Federelement gespeicherte Energie in die Spreizhülse eingezogen wird, so dass die Spreizhülse radial aufspreizt und den Spreizanker im Bohrloch verankert.

Die Erfindung wird nachfolgend anhand bevorzugter Ausführungsbeispiele von im Verfahren verwendeten Spreizankern näher erläutert, die schematisch in den beiliegenden Figuren dargestellt sind. In den Figuren zeigen schematisch:

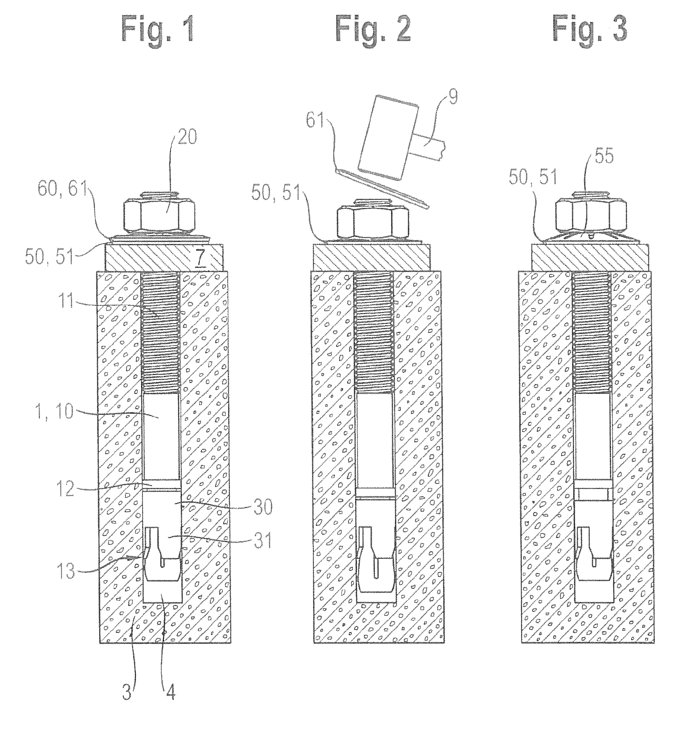

Figuren 1 bis 3: eine Ausführungsform eines im erfindungsgemässen Verfahren verwendeten Spreizankers in aufeinanderfolgenden Zeitpunkten während des Setzvorganges.

In den Figuren 1 bis 3 ist ein Ausführungsbeispiel eines im erfindungsgemässen Verfahren verwendeten Spreizankers 1 dargestellt. Der Spreizanker 1 weist einen länglichen Ankerbolzen 10 auf, an dessen Mantelfläche ein als Aussengewinde 11 ausgeführtes Lastangriffsmittel angeordnet ist. Auf dieses Gewinde 11 des Ankerbolzens 10 ist eine korrespondierende Mutter 20 aufgeschraubt.

Der Spreizanker 1 weist ferner eine Spreizhülse 30 auf, die den Ankerbolzen 10 ringartig umgibt. Die Spreizhülse 30 ist auf ihrer dem Gewinde 11 abgewandten Seite mit mehreren durch Schlitze getrennte Spreizlappen 31 versehen, wobei die Spreizlappen 31 zur Verankerung des Spreizankers 1 radial nach aussen ausstellbar sind.

An seinem dem Gewinde 11 gegenüberliegenden Endbereich weist der Ankerbolzen 10 einen Spreizbereich 13 auf. Im Spreizbereich 13 nimmt der Querschnitt des Ankerbolzens 10, beispielsweise konisch, mit zunehmendem Abstand von der Spreizhülse 30 zu, so dass der Spreizbereich 13 die Spreizhülse 30, insbesondere deren Spreizlappen 31, radial aufspreizen kann, wenn er in Axialrichtung in die Spreizhülse 30 eingezogen wird.

Auf der dem Spreizbereich 13 abgewandten Seite der Spreizhülse 30 weist der Ankerbolzen 10 auf seiner Mantelfläche einen beispielsweise als Ringstufe ausgebildeten Anschlag 12 für die Spreizhülse 30 auf. Dieser Anschlag 12 begrenzt eine axiale Bewegung der Spreizhülse 30 zum Lastangriffsmittel des Ankerbolzens 10, das heisst zum Beispiel zum Gewinde 11 hin.

Der Spreizanker 1 weist ferner ein Federelement 50 mit einer Tellerfeder 51 auf, wobei der Ankerbolzen 10 durch die Tellerfeder 51 hindurchgeführt ist. Die Mutter 20 bildet dabei ein axiales Wiederlager für die Tellerfeder 51, wobei die Tellerfeder 51 im dargestellten Ausführungsbeispiel der Mutter 20 unmittelbar benachbart ist. Grundsätzlich können zwischen der Tellerfeder 51 und der Mutter 20 noch weitere Elemente wie zum Beispiel Ringscheiben angeordnet sein. Insbesondere kann die Tellerfeder 51 auf Höhe des Gewindes 11 am Ankerbolzen 10 angeordnet sein. Im dargestellten Ausführungsbeispiel ist die Tellerfeder 51 mit einer Vielzahl radial nach innen verlaufender Federzungen 55 ausgeführt (Figur 3).

Der Spreizanker 1 weist ferner ein Indikatorelement 60 mit einem Indikatorring 61 auf, der im Auslieferungszustand des Ankers (Figur 1) auf der der Mutter 20 zugewandten Seite der Tellerfeder 51 an der Tellerfeder 51 angeordnet ist. Sobald die Tellerfeder 51 bis zu ihrer Sollspannung vorgespannt ist, löst sich der Indikatorring 61 von der Tellerfeder 51 ab (Figur 2).

Die Sequenz der Figuren 1 bis 3 illustriert schematisch den Setzvorgang des Spreizankers 1 im Rahmen eines erfindungsgemässen Setzverfahrens.

Zunächst wird in einem Substrat 3 ein Bohrloch 4 vorgesehen. Der Ankerbolzen 10 des Spreizankers 1 wird durch eine Öffnung im zu befestigenden Bauteil 7 hindurchgeführt. Sodann wird der Ankerbolzen 10, beispielsweise durch stirnseitige Hammerschläge, in das Bohrloch 4 eingetrieben. Dabei wird auch die Spreizhülse 30 in das Bohrloch 4 eingetrieben, da eine Relativbewegung der Spreizhülse 30 zum Gewinde 11 hin durch den Anschlag 12 unterbunden ist. Die Mutter 20, die ein erstes Widerlager für das Federelement 50 bildet, nähert sich beim Eintrieben immer weiter an das Substrat 3 an, bis schliesslich das Substrat 3 über das Bauteil 7 ein gegenüberliegendes Wiederlager für das Federelement 50 bildet. Dieser Zustand ist in Figur 1 dargestellt.

Wird nun, zum Beispiel durch den in Figur 2 schematisch dargestellten Hammer 9, ein weiterer Hammerschlag auf das Stirnende des Ankerbolzens 10 ausgeführt, so wird beim hieraus resultierenden tieferen Eindringen des Ankerbolzens 10 in das Bohrloch 4 das Federelement 50 zwischen Mutter 20 und Substrat 3 komprimiert, d.h. Energie aus dem Hammerschlag wird im Federelement 50 gespeichert. Wird dabei eine Sollspannung im Federelement 50 erreicht, so löst sich wie in Figur 2 gezeigt der Indikatorring 61 vom Federelement 50 ab. Das Ansprechen des Indikatorelements 60 ist somit ein Nachweis dafür, dass die Sollspannung erreicht wurde.

Am Ende des Hammerschlages kann sich wie in Figur 3 gezeigt das Federelement 50 wieder entspannen. Dabei bewegt es die Mutter 20 ein Stück weit vom Substrat 3 hinweg und zieht hiermit den Ankerbolzen 10 ein Stück weit wieder aus dem Bohrloch 4 heraus. Während dieses Vorganges bleibt die Spreizhülse 30 aufgrund ihrer Wechselwirkung mit der Wand des Bohrlochs 4 jedoch im Bohrloch 4 zurück. Infolgedessen kommt es zu einer axialen Relativbewegung zwischen Ankerbolzen 10 und Spreizhülse 30, bei welcher der Spreizbereich 13 in die Spreizhülse 30 eingezogen wird. Hierdurch wird die Spreizhülse 30 radial aufgeweitet und der Spreizanker 1 im Substrat 3 festgelegt.

Die Energie für das radiale Aufweiten der Spreizhülse 30 entstammt dem Federelement 50. Daher lässt der Zustand des Indikatorelements 60, welches das Federelement 50 überwacht, Rückschlüsse auf die Vollständigkeit des Setzvorgangs zu.

## Patentansprüche

1. Verfahren zum Setzen eines Spreizankers (1) mit
einem Ankerbolzen (10) mit einem Spreizbereich (13),
einer Spreizhülse (30), welche den Ankerbolzen (10) umgibt, und welche durch Einziehen des Spreizbereichs (13) aufspreizbar ist, und
einem am Ankerbolzen (10) angeordneten Federelement (50), welches durch Einführen des Ankerbolzens (10) in ein Bohrloch (4) spannbar ist, und beim anschliessenden Entspannen den Spreizbereich (13) des Ankerbolzens (10) in die Spreizhülse (30) einziehen kann,
bei dem
- in einem Substrat (3) das Bohrloch (4) bereitgestellt wird,
- die Spreizhülse (30) des Spreizankers (1) durch Aufbringen von Axialkräften auf den Ankerbolzen (10) in das Bohrloch (4) eingetrieben wird, und
- der Spreizbereich (13) des Ankerbolzens (10) durch im Federelement (50) gespeicherte Energie in die Spreizhülse (30) eingezogen wird, so dass die Spreizhülse (30) radial aufspreizt und den Spreizanker (1) im Bohrloch (4) verankert,
**dadurch gekennzeichnet,**
- **dass** das Federelement (50) des Spreizankers (1) durch Aufbringen von Axialkräften auf den Ankerbolzen (10) bis zu einer Sollspannung gespannt wird, wobei das Erreichen der Sollspannung durch ein Indikatorelement (60) angezeigt wird.

2. Verfahren nach Anspruch 1,
**dadurch gekennzeichnet,**
**dass** das Indikatorelement (60) mechanisch mit dem Ankerbolzen (10) verbunden ist.

3. Verfahren nach einem der vorstehenden Ansprüche,
**dadurch gekennzeichnet,**
**dass** das Indikatorelement (60) am Federelement (50) angeordnet ist.

4. Verfahren nach einem der vorstehenden Ansprüche,
**dadurch gekennzeichnet,**
**dass** das Federelement (50) zumindest eine Tellerfeder (51) aufweist, und
**dass** das Indikatorelement (60) einen Indikatorring (61) aufweist, welcher mit der Tellerfeder (51) verbunden ist, und welcher sich bei Erreichen der Sollspannung zumindest teilweise von der Tellerfeder (51) löst.

5. Verfahren nach Anspruch 4,
**dadurch gekennzeichnet,**
**dass** die Tellerfeder (51) und der Indikatorring (61) den Ankerbolzen (10) umgeben.

6. Verfahren nach einem der vorstehenden Ansprüche,
**dadurch gekennzeichnet,**
**dass** das Indikatorelement (60) durch Deformation des Federelements (50) oder durch Aufschlag eines mit dem Ankerbolzen (10) zusammenhängenden Elements (20) betätigbar ist.

7. Verfahren nach einem der vorstehenden Ansprüche,
**dadurch gekennzeichnet,**
**dass** der Ankerbolzen (10) ein axiales Widerlager für das Federelement (50) aufweist, welches durch eine am Ankerbolzen (10) angeordnete Mutter (20) gebildet wird.

8. Verfahren nach einem der vorstehenden Ansprüche,
**dadurch gekennzeichnet,**
**dass** am Ankerbolzen (10) ein Anschlag (12) vorgesehen ist, der eine Verschiebung der Spreizhülse (30) vom Spreizbereich (13) hinweg begrenzt.

9. Verfahren nach einem der vorstehenden Ansprüche,
**dadurch gekennzeichnet,**
**dass** das Federelements (50) eine degressive Federkennlinie aufweist.

## Claims

1. Method of setting an expansion anchor (1), comprising
an anchor bolt (10) with an expansion region (13),
an expansion sleeve (30) that surrounds the anchor bolt (10) and can be expanded by retracting the expansion region (13), and
a spring element (50) arranged on the anchor bolt (10), wherein said spring element can be tensioned by inserting the anchor bolt (10) into a drill hole (4) and can retract the expansion region (13) of the anchor bolt (10) into the expansion sleeve (30) when it is subsequently relaxed,
in which
- the drill hole (4) is provided in a substrate (3),
- the expansion sleeve (30) of the expansion anchor (1) is driven into the drill hole (4) by applying axial forces to the anchor bolt (10), and
- the expansion region (13) of the anchor bolt (10) is retracted into the expansion sleeve (30) by energy stored in the spring element (50) so that the expansion sleeve (30) expands radially and anchors the expansion anchor (1) in the drill hole (4),
**characterised in that**
- the spring element (50) of the expansion anchor (1) is tensioned to a required tension by applying axial forces to the anchor bolt (10), an indicator element (60) indicating when the required tension is reached.

2. Method according to claim 1, **characterised in that** the indicator element (60) is mechanically connected to the anchor bolt (10).

3. Method according to one of the preceding claims, **characterised in that** the indicator element (60) is arranged on the spring element (50).

4. Method according to one of the preceding claims, **characterised in that** the spring element (50) has at least one disc spring (51) and that the indicator element (60) has an indicator ring (61) that is connected to the disc spring (51) and is at least partially detached from the disc spring (51) when the required tension is reached.

5. Method according to claim 4, **characterised in that** the disc spring (51) and the indicator ring (61) surround the anchor bolt (10).

6. Method according to one of the preceding claims, **characterised in that** the indicator element (60) can be actuated by deformation of the spring element (50) or by the impact of an element (20) connected to the anchor bolt (10).

7. Method according to one of the preceding claims, **characterised in that** the anchor bolt (10) has an axial support for the spring element (50), formed by a nut (20) arranged on the anchor bolt (10).

8. Method according to one of the preceding claims, **characterised in that** a stop (12) is provided on the anchor bolt (10) and limits the displacement of the expansion sleeve (30) away from the expansion region (13).

9. Method according to one of the preceding claims, **characterised in that** the spring element (50) has degressive spring characteristics.

## Revendications

1. Procédé de pose d'un ancrage expansible (1) comportant :
un boulon d'ancrage (10) ayant une zone d'expansion (13),
une douille d'expansion (30) qui entoure le boulon d'ancrage (10) et qui peut être écartée en rétractant la zone d'expansion (13), et
un élément à ressort (50) agencé sur le boulon d'ancrage (10) qui peut être mis sous tension en insérant le boulon d'ancrage (10) dans une trou percé (4) et qui peut rétracter la zone d'expansion (13) du boulon d'ancrage (10) dans la douille d'expansion (30) lorsque la tension est ensuite relâchée,
comportant les étapes consistant à :
- préparer le trou percé (4) dans un substrat (3),
- enfoncer la douille d'expansion (30) de l'ancrage expansible (1) dans le trou percé (4) en appliquant des forces axiales sur le boulon d'ancrage (10), et
- rétracter la zone d'expansion (13) du boulon d'ancrage (10) dans la douille d'expansion (30) au moyen de l'énergie emmagasinée dans l'élément à ressort (50), de telle sorte que la douille d'expansion (30) soit écartée radialement et que l'ancrage expansible (1) s'ancre dans le trou percé (4),
**caractérisé en ce que**
- l'élément à ressort (50) de l'ancrage expansible (1) est mis sous tension sur le boulon d'ancrage (10) jusqu'à une tension de consigne en appliquant des forces axiales, dans lequel l'atteinte de la tension de consigne est indiquée par un élément indicateur (60).

2. Procédé selon la revendication 1,
**caractérisé en ce que**
l'élément indicateur (60) est mécaniquement lié au boulon d'ancrage (10).

3. Procédé selon l'une des revendications précédentes,
**caractérisé en ce que**
l'élément indicateur (60) est agencé sur l'élément à ressort (50).

4. Procédé selon l'une des revendications précédentes,
**caractérisé en ce que**
l'élément à ressort (50) comporte au moins un ressort Belleville (51), et **en ce que**
l'élément indicateur (60) comporte un anneau indicateur (61) qui est relié au ressort Belleville (51), et qui se détache au moins partiellement du ressort Belleville (51) lorsque la tension de consigne est atteinte.

5. Procédé selon la revendication 4,
**caractérisé en ce que**
le ressort Belleville (51) et l'anneau indicateur (61) entourent le boulon d'ancrage (10).

6. Procédé selon l'une des revendications précédentes,
**caractérisé en ce que**
l'élément indicateur (60) peut être actionné par déformation de l'élément à ressort (50) ou par l'impact d'un élément (20) associé au boulon d'ancrage (10).

7. Procédé selon l'une des revendications précédentes,
**caractérisé en ce que**
le boulon d'ancrage (10) comporte un contre-palier axial pour l'élément à ressort (50) qui est formé par un écrou (20) agencé sur le boulon d'ancrage (10).

8. Procédé selon l'une des revendications précédentes,
**caractérisé en ce que**
une butée (12) est prévue sur le boulon d'ancrage (10), laquelle butée limite un déplacement de la douille d'expansion (30) à partir de la zone d'expansion (13).

9. Procédé selon l'une des revendications précédentes,
**caractérisé en ce que**
l'élément à ressort (50) présente une courbe caractéristique d'élasticité dégressive.
